# EUROPÄISCHE PATENTSCHRIFT

(11) **EP 1 331 421 B1**
(45) Veröffentlichungstag und Bekanntmachung des Hinweises auf die Patenterteilung: **04.05.2011**
(21) Anmeldenummer: 02028864.3
(22) Anmeldetag: 23.12.2002
(51) Int. Cl.: F16H 59/02

(54) **Schalthebelanordnung mit klemmgeschütztem Balg**
Shift lever device avoiding bellow pinching
Levier de changement de vitesses adapté pour empêcher le pincement du soufflet

(30) Priorität: 29.01.2002 DE 10203258
(43) Veröffentlichungstag der Anmeldung: 30.07.2003
(73) Patentinhaber: GM Global Technology Operations, Inc., Detroit, MI 48265-3000 (US)
(72) Erfinder: Hahn, Thorsten, Dipl.-Ing., 55286 Wörrstadt (DE); Geiberger, Axel, Dipl.-Ing., 55128 Mainz (DE)
(74) Vertreter: Strauss, Peter

(56) Entgegenhaltungen:
- EP-A- 0 194 703
- EP-A- 0 211 215
- EP-A- 0 315 128
- DE-A1- 2 353 417
- DE-U1- 8 707 197
- DE-U1- 29 615 147

## Beschreibung

Die Erfindung betrifft eine Schalthebelanordnung nach dem Oberbegriff des Anspruchs 1 bzw. des Anspruches 13.

Schalthebelanordnungen dieser Art werden insbesondere bei Kraftfahrzeugen für den Schalthebel eines Handschaltgetriebes eingesetzt. Dabei ist der Träger der Schalthebelanordnung im allgemeinen eine in der Fahrgastzelle angeordnete Konsole, und das Gelenk, an dem der Schalthebel schwenkbar montiert ist, ist im Innern der Konsole untergebracht. Der Balg trennt das Innere der Konsole von der Fahrgastzelle und schützt so das Gelenk vor Verunreinigungen. Der Balg erstreckt sich frei zwischen seiner mit dem Rand der Öffnung verbundenen Basis und seiner am Schalthebel befestigten Spitze, wobei der Verlauf des Balges in einem Querschnitt, wenn man dessen Steifigkeit vernachlässigen könnte, einer sogenannten Kettenlinie folgen würde. Ein durchhängender Abschnitt der Kettenlinie greift dabei durch die Öffnung ins Innere der Konsole ein, und wenn der Schalthebel sich nahe an einem seitlichen Anschlag befindet, besteht die Gefahr, dass der Balg stellenweise so weit in die Öffnung hineinhängt, dass er mit dem Gelenk in Kontakt kommen kann oder zwischen dem Schalthebel und einem vom Gelenk vorspringenden Anschlag eingeklemmt werden kann. Aufgrund der Nähe einer solchen Einklemmstelle zum Drehmittelpunkt des Gelenks kann ein Benutzer, der den Schalthebel betätigt, ohne es zu wollen, extrem große Scherkräfte auf den Balg ausüben, die zum Reißen des Balges führen können.

Das Problem des Einklemmens lässt sich zwar mit einem selbsttragenden Balg wie z. B. in EP 0 194 703 B1 beschrieben umgehen, der nicht in die Öffnung durchhängt, doch besteht bei einem solchen Balg, der im allgemeinen aus einem Weichkunststoffmaterial geformt ist, die Möglichkeit einer Beschädigung durch Fremdkörper in der Fahrgastzelle oder eines Bruchs durch Materialermüdung. Eine Schalthebelanordnung mit einem solchen selbsttragenden Balg ist daher nicht notwendigerweise dauerhafter und wartungsärmer als ein durchhängender Balg, der vor Kontakt mit dem Gelenk geschützt ist.

Herkömmlicherweise wird das Einklemmen eines Balges zwischen Schalthebel und dem Rand der Öffnung wie z.B. in gattungsbildenden DE 296151471 mit Hilfe von elastischen Bändern verhindert, die sich entlang einer dem Schalthebel zugewandten Innenseite des Balges von dessen Basis aus bis zu dessen Spitze erstrecken. Wenigstens wenn der Schalthebel sich an einem von dem Band abgewandten Anschlag befindet steht das Band unter Zugspannung.

Die Länge zwischen Basis und Spitze des Balges in dessen auf dem Band aufliegenden Bereich muss hingegen so bemessen sein, dass der Schalthebel in den abgewandten Anschlag gestellt werden kann, ohne den Balg zu spannen.

Die elastischen Bänder sind zwar wirksam, um den darauf aufliegenden Balg im Vergleich zu einer Stellung anzuheben, die er ohne die Bänder innehätte und ihn so aus dem Klemmgefährdungsbereich herauszuhalten. Da der Balg aber normalerweise länger als die elastischen Bänder ist, wirft er viele Falten.

Diese beeinträchtigen nicht nur das ästhetische Erscheinungsbild des Balges, sie führen darüber hinaus dazu, dass bei jeder Schaltbewegung an den Falten des Balges Walkarbeit geleistet wird, die einerseits zu einem vorzeitigen Verschleiß des Balges und andererseits zur Erzeugung von Knirsch- oder Raschelgeräuschen bei jeder Betätigung des Schalthebels führt.

Aufgabe der vorliegenden Erfindung ist, eine Schalthebelanordnung anzugeben, bei der der Balg wirksam gegen Einklemmen und Beschädigung geschützt ist, ohne dass hierfür eine übermäßige Faltenbildung in Kauf genommen werden muss. Andererseits soll sich der Balg durch ein ästhetisches Erscheinungsbild auszeichnen.

Die Aufgabe wird gemäß dem kennzeichnenden Teil des Patentanspruches 1 dadurch gelöst, dass die Schalthebelanordnung mit Mitteln zum Verschieben des durchhängenden Abschnitts aus seiner - wie oben erläutert idealerweise der Kettenlinie entsprechenden - Gleichgewichtsposition in Richtung des Randes der Öffnung ausgestattet ist. D. h., anstatt den Balg von unten her zu unterstützen und ihn so in Falten zu zwingen, wird er im Wesentlichen lediglich seitlich deformiert.

Einer ersten Ausgestaltung der Erfindung zufolge umfassen die Mittel zum Verschieben des durchhängenden Abschnitts ein an dem Balg angebrachtes Versteifungselement, das diesen vom Schalthebel abgespreizt hält und so den durchhängenden Abschnitt aus dem Klemmgefährdungsbereich an der Basis des Schalthebels seitlich heraus drängt. Dieses Versteifungselement erstreckt sich vorzugsweise ringförmig um den Schalthebel. Es ist ferner vorzugsweise mit dem Schalthebel unverbunden, sondern lediglich von dem Balg selbst getragen, so dass es keine Kräfte in vertikaler Richtung auf diesen ausüben kann.

Dieses Versteifungselement kann einen im Wesentlichen festen, nicht durch eine Schaltbewegung des Hebels veränderbaren Querschnitt haben.

Einer zweiten Ausgestaltung zufolge ist ein flächiges Versteifungselement an einem Bereich des Balges angebracht, der in Abwesenheit des Versteifungselements in der Lage wäre, den durchhängenden Abschnitt zu bilden und in den Klemmgefährdungsbereich einzugreifen. Indem das Versteifungselement ein Durchbiegen dieses Bereichs verhindert, hindert es den Bereich auch daran, in den Klemmgefährdungsbereich einzudringen.

Einer dritten Ausgestaltung zufolge ist ein Versteifungselement vorgesehen, das im Querschnitt zwei federnd verbundene Schenkel aufweist, von denen einer zwischen dem tiefsten Punkt des durchhängenden Abschnitts und der Spitze des Balges mit dem Balg und der andere zwischen diesem tiefstem Punkt und dem Rand der Öffnung mit dem Balg oder mit dem Rand der Öffnung selbst verbunden ist. Wenn bei einer Bewegung des Schalthebels ein Teil des Balges gestreckt wird, so ändert sich der Querschnitt des Versteifungselements, indem an einem am gestreckten Teil des Balges angebrachten Teil des Versteifungselements dessen zwei Schenkel elastisch auseinander gespreizt werden; bei einer Schaltbewegung in Gegenrichtung ziehen die Schenkel sich zusammen und ziehen so den tiefsten Punkt des durchhängenden Abschnitts zum Rand der Öffnung hin und fort aus dem klemmgefährdeten Bereich.

Um das Vorhandensein des Versteifungselementes zu kaschieren, kann der Balg zweckmäßigerweise einen mehrlagigen Aufbau mit einer äußeren, sichtbaren und einer inneren, dem Gelenk zugewandten Materiallage haben, und wenigstens der zwischen dem tiefsten Punkt und der Spitze des Balgs gelegene Schenkel ist an der inneren Materiallage befestigt. Befestigungsmale, etwa eine Naht, Prägemale oder dergleichen sind so von der Außenseite des Balgs her nicht sichtbar. Der zweite Schenkel des Versteifungselements kann in gleicher Weise an der inneren Materiallage oder auch unmittelbar am Rand der Öffnung befestigt sein.

Einer vierten bevorzugten Ausgestaltung zufolge umfassen die Mittel zum Verschieben des durchhängenden Abschnitts ein elastisch dehnbares flexibles Band, das einerseits an dem Balg und andererseits an dem Rand der Öffnung beabstandet von der Basis des Balges befestigt ist. Infolge der Beabstandung unterstützt das flexible Band den Balg nicht und erzwingt somit auch keinen unerwünschten Faltenwurf, sondern bewirkt lediglich eine Verlagerung des tiefsten Punkts des Balges zum Rand der Öffnung hin.

Das Band ist am Balg vorzugsweise in einem Abstand von dessen Spitze befestigt, und zwar sollte der Abstand wenigstens ein Drittel, besser noch wenigstens die Hälfte der Ausdehnung des Balges von seiner Basis bis zu seiner Spitze betragen. Insbesondere kann das flexible Band direkt am durchhängenden Abschnitt des Balges angreifen. Auch hier ist für eine unauffällige Befestigung des flexiblen Bandes an dem Balg ein mehrlagiger Aufbau des Balges zweckmäßig, der es erlaubt, das flexible Band an der inneren Lage beispielsweise zu vernähen, ohne dass dies von außen sichtbar ist.

Die Aufgabe wird ferner gemäß dem kennzeichnenden Teil des Patentanspruches 13 dadurch gelöst, dass Mittel zum Verschieben des durchhängenden Abschnittes einen vom Balg umgebenen Formkörper aufweisen, wobei der Formkörper im Schalthebel gelagert ist und sich in Richtung der Öffnung des Trägers, somit nach unten hin erweitert. Bei Schaltbewegungen legt sich vorzugsweise der gespannte Bereich des Balges am Formkörper an und es ist vorzugsweise der diesem Bereich des Formkörpers abgewandte, nicht gespannte Bereich des Balges vorzugsweise daran gehindert, in den Klemmgefährdungsbereich zu gelangen, da er sich an den Formkörper anlegt. Der mit dem Schalthebel verbundene Formkörper folgt demnach den Schaltbewegungen. Von Vorteil ist es, wenn der Formkörper eine solche Erstreckung von der Spitze des Balges weg aufweist, dass das Gelenk in den Formkörper ragt. Der Formkörper umgibt somit das Gelenk in Art einer Haube.

Der Formkörper ist vorzugsweise glockenförmig gestaltet. Es handelt sich um ein im Wesentlichen rotationssymmetrisches Teil, dessen Symmetrieachse mit der Längsachse des Schalthebels zusammenfällt. Besonders einfach lässt sich der Formkörper am Schalhebel befestigen, wenn er zweiteilig gestaltet ist. Es sind insbesondere zwei identische Formkörperhälften vorgesehen, die mittels einer Steckverbindung verbindbar sind, wobei die jeweilige Formkörperhälfte eine Aufnahme für den Schalthebel aufweist. Der Formkörper, insbesondere die beiden Formkörperhälften bestehen bevorzugt aus elastischem Material. Während der Schaltvorgänge bzw. wenn extern auf den Balg eingewirkt wird, kann sich infolgedessen der Formkörper geringfügig verformen. Andererseits kann der Formkörper fest, somit nicht nachgiebig sein.

Der Formkörper kann entsprechend den Styling-Forderungen unterschiedlich gestaltet sein. Es ist nicht notwendig, dass er, bei einer glockenförmigen Ausbildung, sich als Körper mit geschlossener Mantelfläche darstellt. Es ist durchaus denkbar, den Formkörper als Netzkörper auszubilden oder aber als Körper mit einer Vielzahl von stabförmigen Plattenabschnitten, die sich, ausgehend von einem mit dem Schalthebel verbundenen Ringabschnitt des Formkörpers, in Richtung der Öffnung des Trägers erstrecken.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: eine schematische perspektivische Ansicht einer Gangschalthebelanordnung für ein Kraftfahrzeug, an der die vorliegende Erfindung anwendbar ist;
- Fig. 2: einen Schnitt durch eine erfindungsgemäße Schalthebelanordnung gemäß einer ersten Ausgestaltung der Erfindung;
- Fig. 3: einen zweiten Schnitt durch die Schalthebelanordnung der Fig. 2, die deren Balg in einem verformten Zustand zeigt, um die Wirkungsweise der Erfindung zu erläutern;
- Fig. 4: eine zweite Ausgestaltung der Schalthebelanordnung gemäß Fig. 2;
- Fig. 5: einen Materialzuschnitt für den Balg der Ausgestaltung der Fig. 4;
- Fig. 6: einen Schnitt durch eine Schalthebelanordnung gemäß einer zweiten Ausgestaltung der Erfindung mit Schalthebel in mittiger Stellung;
- Fig. 7: die Schalthebelanordnung der Fig. 5 mit an einen Anschlag ausgelenktem Schalthebel;
- Fig. 8: einen schematischen Schnitt durch eine Schalthebelanordnung gemäß einer dritten Ausgestaltung der Erfindung mit Schalthebel in mittiger Stellung;
- Fig. 9: die Schalthebelanordnung der Fig. 8 mit an einen Anschlag ausgelenktem Schalthebel;
- Fig. 10: eine Ansicht eines Zuschnittes für den Balg der Ausgestaltung der Fig. 8 und 9;
- Fig. 11: einen Schnitt durch eine Schalthebelanordnung gemäß einer vierten Ausgestaltung der Erfindung mit Schalthebel in mittiger Stellung;
- Fig. 12: die Schalthebelanordnung der Figur 11 mit an einen Anschlag ausgelenktem Schalthebel;
- Fig. 13: eine Ansicht des Formkörpers in Richtung des Pfeils XIII in Fig. 11 und
- Fig. 14: einen Schnitt durch den Formkörper gemäß der Linie XIV - XIV in Fig. 13.

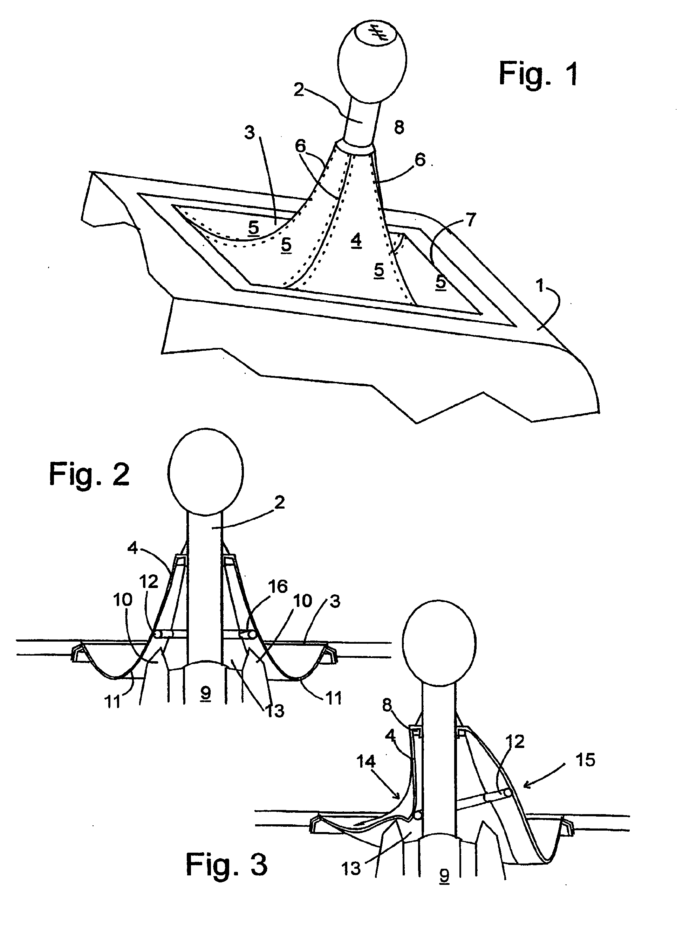

Fig. 1 zeigt eine perspektivische Ansicht einer an einer Mittelkonsole 1 eines Kraftfahrzeugs montierten Schalthebelanordnung. Ein Schalthebel 2, der an einem in der Fig. nicht sichtbaren, im Innern der Konsole 1 montierten Gelenk um zwei Achsen schwenkbar ist, erstreckt sich durch eine Öffnung 3 der Konsole. Die Öffnung 3 ist durch einen flexiblen Balg 4 verschlossen. Der Balg 4 setzt sich aus vier in etwa trapezförmigen Teilstücken 5 zusammen, die jeweils an zwei schrägen Kanten 6 paarweise mit einander vernäht sind. Von den zwei parallelen Kanten der Trapezform bildet eine längere jeweils eine Basis 7 des Balges, die am Rand der Öffnung 3 befestigt ist, und die kürzere der zwei parallelen Kanten bildet eine Spitze 8 des Balges, die am Schalthebel 2 befestigt ist.

Fig. 2 zeigt einen Schnitt durch die Schalthebelanordnung gemäß einer ersten Ausgestaltung der Erfindung. Der Schalthebel 2 ist in dem nur schematisch und teilweise dargestellten Gelenk 9 um zwei nicht dargestellte Achsen schwenkbar, eine erste, die sich in der Ebene der Fig. erstreckt, und eine zweite, die auf dieser Ebene senkrecht steht. Die Schwenkbewegungsfreiheit des Schalthebels 2 um diese zweite Achse ist durch seitlich am Gelenk 9 angebrachte Vorsprünge 10 begrenzt, gegen die der Schalthebel 2 anschlagen kann. Wenn ein in die Öffnung 3 hinein durchhängender Abschnitt 11 des Balges zwischen den Schalthebel 2 und einen der Vorsprünge 10 gelangt, kann er zwischen Schalthebel 2 und Vorsprung 10 eingeklemmt werden. Wenn der Schalthebel 2 mit solcherart eingeklemmten Balg 4 um die erste Achse geschwenkt wird, so besteht eine große Gefahr, dass der Balg durch auf ihn einwirkende Scherkräfte beschädigt wird.

Um dies zu vermeiden, ist bei der Schalthebelanordnung gemäß Fig. 2 an der dem Gelenk 9 zugewandten Innenseite des Balges 4 ein Versteifungsring 12 befestigt. Der Durchmesser des Versteifungsrings 12 ist so bemessen, dass er in der Fig. 2 gezeigten Mittelstellung des Schalthebels 2 den Balg 4 nicht oder nicht wesentlich verformt. In dieser Stellung ist der Versteifungsring 12 von außen nicht zu erkennen und beeinträchtigt somit auch nicht das Erscheinungsbild des Balges 4. Wenn der Schalthebel 2 aus seiner Mittelstellung ausgelenkt wird, z.B. nach links in Fig. 2, so rückt der Versteifungsring 12 auf der linken Seite näher an den Schalthebel 2 heran. Gleichzeitig rückt er auf der rechten Seite von ihm ab und spreizt so auf dieser Seite den Balg 4 vom Schalthebel fort. Auf diese Weise wird der tiefste Punkt des durchhängenden Abschnitts 11 auf der rechten Seite des Balges im Vergleich zur Gleichgewichtslage, die er in Abwesenheit des Versteifungsringes 12 inne hätte, nach rechts, zum Rand der Öffnung 3 hin verschoben. Auf diese Weise wird der rechte Teil des Balges daran gehindert, in einen Raumbereich 13 zwischen dem Schalthebel 2 und dem rechten Vorsprung 10 einzudringen, in welchem er anderenfalls bei einem Schwenken des Schalthebels in die Gegenrichtung zwischen diesem und dem Vorsprung 10 eingeklemmt werden könnte.

Der Versteifungsring 12 verhindert auch ein Einklemmen des Balges 4, wenn dieser durch eine von außen ausgeübte Verformung in den Klemmgefährdungsbereich 13 gelangt. Fig. 3 zeigt eine solche Situation, wo der linke Bereich des Balges 4 durch eine in Richtung des Pfeils 14 einwirkende äußere Kraft in den Klemmgefährdungsbereich 13 eingeführt ist. Die Verformung des Balges führt zu einer Schwenkbewegung des Versteifungsrings 12, wobei der Mittelpunkt der Schwenkbewegung ungefähr in Höhe der Befestigung der Spitze 8 des Balges am Schalthebel 2 liegt. Der Versteifungsring 12 wird somit durch die Verformung des Balges 4 angehoben, und sobald die äußere Kraft in Richtung des Pfeils 14 nicht mehr einwirkt, neigt der Versteifungsring dazu, in Richtung des Pfeils 15 in seine in Fig. 2 gezeigte Mittelstellung zurückzukehren und so den Balg 4 aus dem Klemmgefährdungsbereich 13 zu verdrängen.

Beim Ausführungsbeispiel der Fig. 2 und 3 entspricht der Durchmesser des Versteifungsrings 12 in etwa dem Abstand zwischen den Vorsprüngen 10 und 11, und der Versteifungsring 12 ist am Balg 4 in etwa auf halber Länge zwischen dessen Basis 7 und Spitze 8 befestigt. Bei einem Versteifungsring mit kleinerem Durchmesser, der näher an der Spitze 8 angebracht ist, ist die Wirksamkeit weniger sicher. Der Versteifungsring kann jedoch auch einen größeren Durchmesser haben und niedriger angeordnet sein, als in der Fig. gezeigt, solange seine Anbringung noch hoch genug ist, damit er nicht selber in den Klemmgefährdungsbereich 13 eindringen kann.

Der Versteifungsring 12 kann an dem Balg 4 in von außen unsichtbarer Weise befestigt werden, indem er beim Zusammennähen der Teilstücke 5 des Balges mit eingenäht wird, wie in Fig. 2 durch innen um den Versteifungsring 12 geführte Nähfadenstücke 16 schematisch dargestellt ist.

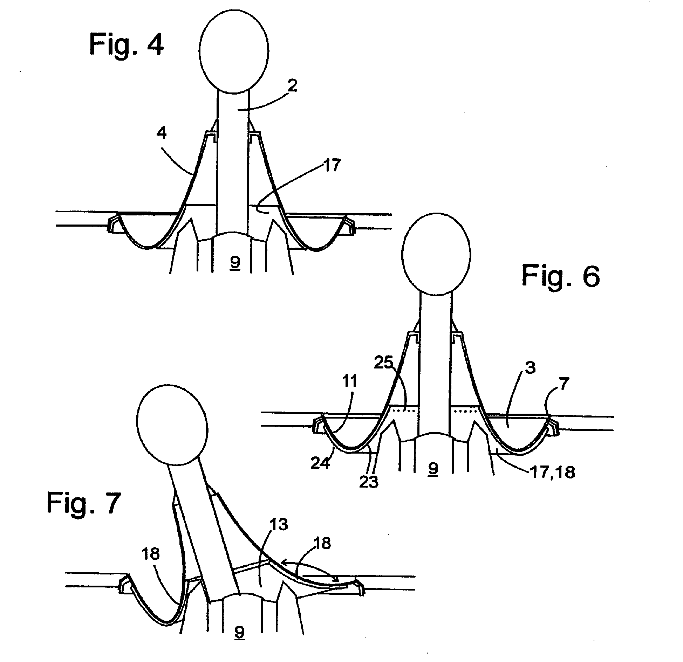

Bei der in Fig. 4 gezeigten zweiten Ausgestaltung ist der einteilige Versteifungsring 12 von kreisrundem Querschnitt durch einen aus mehreren plattenartigen Segmenten zusammengesetzten Versteifungsring 17 ersetzt.

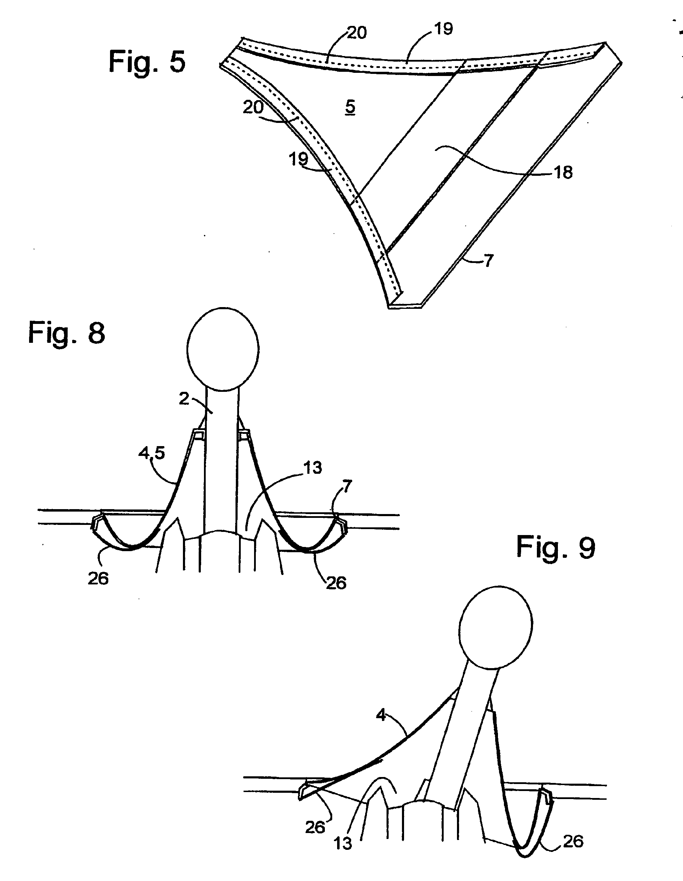

Fig. 5 zeigt den Aufbau der einzelnen Teilstücke 5, aus denen der Balg 4 dieser Ausgestaltung zusammengesetzt ist. An der in Fig. 7 dem Betrachter zugewandten Innenseite des Balges ist parallel zur Basis 7 ein Versteifungssegment 18 in Form eines in etwa trapezförmigen Zuschnitts aus einer kräftigen, elastischen Kunststofffolie angeordnet. Das Versteifungssegment 18 ist an dem Teilstück 5 befestigt durch Umschlagen von schmalen Streifen 19 entlang der schrägen Kanten 6 des Teilstücks 5 und Vernähen dieser Streifen entlang als gestrichelte Linien dargestellter Nähte 20 unter Einschluss der Enden des Versteifungssegments 18. Die Wirkung dieses abgewandelten Versteifungsrings 17 ist im Wesentlichen die gleiche wie beim Versteifungsring 12.

Bei einer bevorzugten Abwandlung der zweiten Ausgestaltung sind von den vier Teilstücken 5, aus denen der Balg 4 zusammengesetzt ist, nur zwei Teilstücke, die einander diametral gegenüberliegen und jeweils oberhalb des Klemmgefährdungsbereiches 13 liegen, mit einem Versteifungssegment 18 ausgestattet. Diese zwei Segmente 18 bilden, da untereinander nicht verbunden, keinen Ring, doch genügen sie, um eine Durchbiegung der Teilstücke 5 oberhalb des klemmgefährdeten Bereiches zu verhindern.

Eine Weiterentwicklung des Ausführungsbeispiels der Fig. 4 ist in Fig. 6 gezeigt. Der wesentliche Unterschied zwischen den beiden Fig. ist, dass bei Fig. 6 die den Versteifungsring 17 bildenden Segmente 18 über den tiefsten Punkt des durchhängenden Abschnitts 11 hinaus in Richtung der am Rand der Öffnung 3 eingeklemmten Basis 7 des Balgs hin verlängert sind. Die Versteifungselemente 18 werden vor der Montage des Balgs 4 derart vorgekrümmt, dass ihre Krümmung im entspannten Zustand dem natürlichen Verlauf des Balges 4 ohne Versteifungsring folgt, so dass zumindest in der in Fig. 6 gezeigten mittigen Stellung des Schalthebels 2 das Vorhandensein des Versteifungsrings 17 von außen nicht zu erkennen ist. Die vorgekrümmten Segmente 18 bilden so jeweils einen inneren, zwischen dem tiefsten Punkt im Querschnitt des Balges und der Spitze 8 gelegenen Schenkel 23, und einen zwischen dem tiefsten Punkt und dem Rand der Öffnung 3 gelegenen äußeren Schenkel 24, die gegeneinander elastisch verschwenkbar sind.

Auch bei dieser Ausgestaltung können die Segmente 18, anstatt einen Ring zu bilden, nur an den über dem klemmgefährdeten Bereich 13 liegenden Teilstücken 5 angebracht sein.

Die inneren Schenkel 23 sind jeweils mit den Teilstücken 5 des Balges 4 durch eine entlang ihrer oberen Ränder verlaufende Naht 25 verbunden. Die äußeren Schenkel 24 können in gleicher Weise am Balg 4 vernäht oder direkt am Rand der Öffnung 3 befestigt sein.

Wenn die Naht 25 von außen unsichtbar sein soll, kann der Balg einen mehrlagigen Aufbau haben, bei dem die Naht nur durch wenigstens eine der inneren Lagen, nicht aber die äußerste Lage verläuft.

Wenn der Schalthebel in eine Richtung ausgelenkt wird, z. B. nach links wie in Fig. 7 gezeigt, so wird das Versteifungssegment 18 auf der linken Seite des Balgs 4 leicht gestaucht und seine Schenkel 23, 24 gegeneinander gedrückt, während das Versteifungssegment 18 auf der rechten Seite entgegen einer Federkraft des dortigen Versteifungssegments 18 gestreckt wird. Bei Rückkehr des Schalthebels in die Mittelstellung oder Schwenken bis zum rechten Anschlag kehrt das rechte Versteifungssegment 18 in seinen gekrümmten Zustand zurück und zieht auf diese Weise den Balg 4 aus dem Klemmgefährdungsbereich 13 seitwärts hinaus.

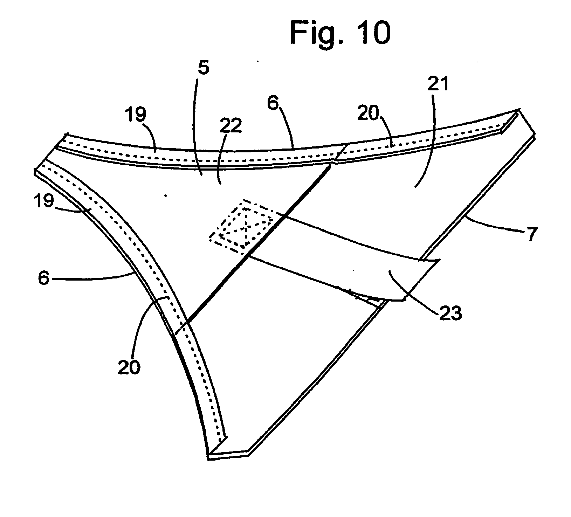

Eine weitere Ausgestaltung der Erfindung wird anhand der Fig. 8 bis 10 erläutert. Fig. 10 zeigt in perspektivischer Ansicht ein Teilstück 5 des Balgs 4 gemäß dieser Ausgestaltung. Das Teilstück 5 ist im Wesentlichen aufgebaut aus einer Außenlage 21, deren Gestalt im Wesentlichen der des in Fig. 5 gezeigten Teilstücks 5 entspricht, und die wie diese entlang schräger Kanten 6 umgeschlagene, durch eine Naht 20 vernähte schmale Streifen 19 aufweist. Eine Innenlage 22, die aus dem gleichen Material wie die Außenlage 21 bestehen kann, erstreckt sich von der Spitze 8 des Teilstücks über etwas mehr als die Hälfte der Entfernung zur Basis 7. Die Streifen 19 der Außenlage 21 sind um die Ränder der Innenlage 22 herumgeschlagen und beide Lagen sind durch die Nähte 20 miteinander verbunden.

An einem der Basis 7 zugewandten Ende der Innenlage 21 ist ein erstes Ende eines flexiblen, elastisch dehnbaren Bandes 26, z.B. einer Gummilitze, vernäht. Bei Teilstücken 5 des Balges 4, die nicht über einem Klemmgefährdungsbereich montiert werden, kann das Band 26 auch entfallen.

Fig. 8 zeigt eine Schalthebelanordnung mit einem aus vier Teilstücken 5, wie in Fig. 10 gezeigt, zusammengesetzten Balg 4. Zwei Bänder 26 der zwei über dem Klemmgefährdungsbereich 13 montierten Teilstücke 5 sind mit ihren zweiten Enden jeweils am Rand der Öffnung 3 jeweils in einem Abstand unterhalb der Verbindung der Basis 7 mit dem Rand befestigt. An den zwei anderen Teilstücken, die nicht klemmgefährdet sind, können des symmetrischen Erscheinungsbildes des Balges 4 wegen ebenfalls Bänder 26 vorgesehen sein; erforderlich ist dies jedoch nicht.

In der in Fig. 8 gezeigten Mittelstellung des Schalthebels 2 sind die Bänder 26 nicht gespannt und hängen frei durch, genau so wie der Balg 4. Wenn der Schalthebel 2 geschwenkt wird, wie in Fig. 9 gezeigt, so hängt auf der Seite, zu der hin der Schalthebel 2 geschwenkt ist, der rechten Seite in Fig. 2, der Balg 4 und das daran befestigte Band 26 frei herab, auf der linken Seite hingegen wird der Balg 4 langgezogen und das Band 26 gedehnt. Sobald der Schalthebel 2 zurückgeschwenkt wird, zieht sich das linke Band 26 wieder zusammen und zieht so den Balg 4 nach links vom klemmgefährdeten Bereich 13 weg, so dass der Balg 4 niemals in den Bereich 13 hinein durchhängen und so eingeklemmt werden kann. Dabei unterstützt das gespannte Band 26 den Balg 4 nicht, sondern übt eine im Wesentlichen seitwärts zum Rand der Öffnung 3 und eventuell in geringerem Maße auch abwärts gerichtete Kraft auf den Balg 4 aus.

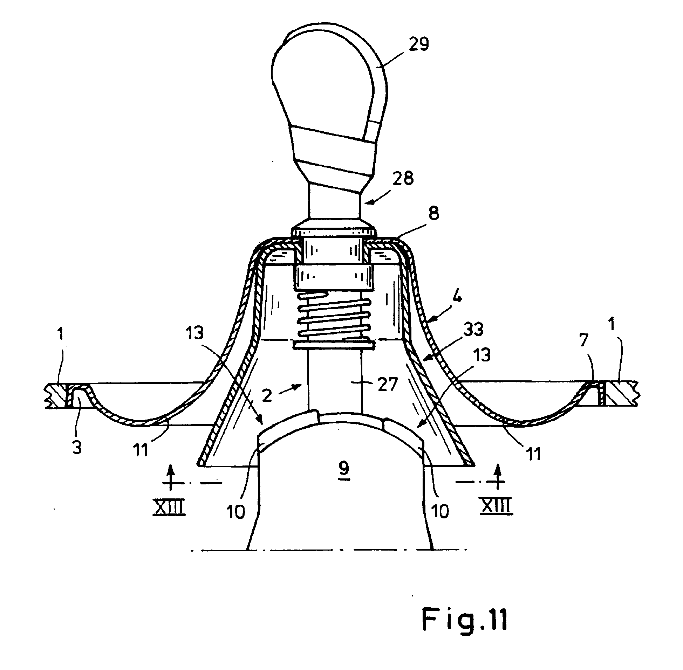

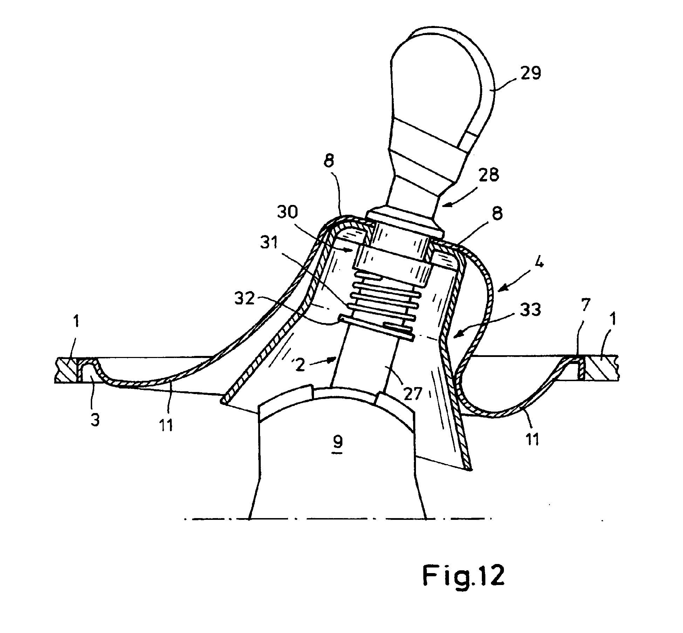

Eine weitere Ausgestaltung der Erfindung wird anhand der Fig. 11 bis 14 erläutert. Bei der dort gezeigten Schalthebelanordnung ist ein Abschnitt 27 des Schalthebels 2 im Gelenk 9 gelagert und ein weiterer Abschnitt 28 des Schalthebels 2, der einen Schaltknauf 29 aufweist, axial bezüglich des rohrförmigen Abschnittes 27 verschiebbar. Hierbei wirkt ein Ringansatz 30 des Abschnittes 28 mit einer vom Abschnitt 27 durchsetzten Feder 31 zusammen, die sich an einer Anschlagplatte 32 des Abschnittes 27 abstützt. Die relative Verschieblichkeit der Abschnitte 27 und 28 ermöglicht es, den Schalthebel 2 zum Erreichen einer bestimmten Schaltstellung zu entsperren. Die Rastglieder, die in diesem Zusammenhang mit dem Gelenk 9 zusammenwirken, sind nicht veranschaulicht.

Der Ringansatz 30 ist mit einer umlaufenden Nut versehen, die der Aufnahme eines Formkörpers 33 und des diese umgebenden Balges 4 dient. Der Formkörper 33 weist die Form einer Glocke auf, wobei an dem oberen Ansatz der Glocke, der sich senkrecht vom Schalthebel 2 wegerstreckt, der Balg 4 anliegt. Von dort ist, bezogen auf die mittige Stellung des Schalthebels 2, wie es in der Figur 11 verdeutlicht ist, der Balg 4 freihängend, somit nicht vom Formkörper 33 unterstützt, zur Mittelkonsole 1 geführt.

Der Formkörper 33 ist damit im Bereich der Spitze 8 des Balges 4 mit dem Schalthebel 2 verbunden. Er erweitert sich in Richtung der Öffnung 3 der Mittelkonsole 1, ist aber zunächst parallel zum Abschnitt 27 des Schalthebels 2 angeordnet.

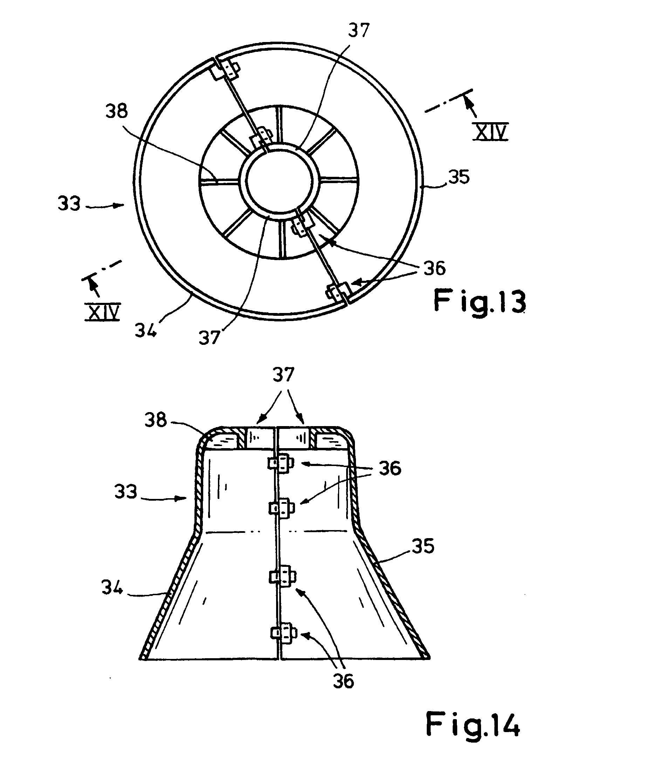

Wie der Darstellung der Fig. 13 und 14 zu entnehmen ist, ist der Formkörper 33 durch zwei identische Formkörperhälften 34 und 35 gebildet. Diese sind mittels einer Vielzahl von Steckverbindungen 36 gebildet. Die jeweilige Formkörperhälfte 34 bzw. 35 weist eine Aufnahme 37 für den Schalthebel 2 auf. Rippen 38 verstärken den Formkörper 33 im Bereich des Überganges von den Aufnahmen 37 zu den Wandabschnitten der jeweiligen Formkörperhälfte 34 bzw. 35, der parallel zur Längsmittelachse des Formkörpers 33 verläuft. Der Formkörper selbst besteht vorzugsweise aus elastischem Material. Er durchsetzt die Öffnung 3 soweit, dass das Gelenk 9 unten in den Formkörper 33 ragt.

### Bezugszeichenliste

- Mittelkonsole: 1
- Schalthebel: 2
- Öffnung: 3
- Balg: 4
- Teilstück: 5
- Schräge Kante: 6
- Basis: 7
- Spitze: 8
- Gelenk: 9
- Vorsprung: 10
- Durchhängender Abschnitt: 11
- Versteifungsring: 12
- Klemmgefährdungsbereich: 13
- Pfeil: 14
- Pfeil: 15
- Nähfaden: 16
- Versteifungsring: 17
- Versteifungssegment: 18
- Streifen: 19
- Naht: 20
- Außenlage: 21
- Innenlage: 22
- Innerer Schenkel: 23
- Äußerer Schenkel: 24
- Naht: 25
- Band: 26
- Abschnitt: 27
- Abschnitt: 28
- Schaltknauf: 29
- Ringansatz: 30
- Feder: 31
- Anschlagplatte: 32
- Formkörper: 33
- Formkörperhälfte: 34
- Formkörperhälfte: 35
- Steckverbindung: 36
- Aufnahme: 37
- Rippe: 38

## Patentansprüche

1. Schalthebelanordnung mit einem Träger (1), einem Schalthebel (2), der über ein Gelenk (9) schwenkbar mit dem Träger (1) verbunden ist und sich durch eine Öffnung (3) des Trägers erstreckt, und einem den Schalthebel (2) umgebenden verformbaren Balg (4), der eine mit dem Rand der Öffnung (3) verbundene Basis (7) und eine an dem Schalthebel befestigte Spitze (8) aufweist, **dadurch gekennzeichnet, dass** der Balg (4) zwischen der Basis (7) und der Spitze (8) einen durch die Öffnung (3) durchhängenden Abschnitt (11) aufweist, der in der Lage ist, in einen zum Gelenk (9) benachbarten Klemmgefährdungsbereich (13) einzugreifen, und Mittel (12, 17, 18, 26) zum Verschieben des durchhängenden Abschnitts (11) aus einer Gleichgewichtsposition zum Rand der Öffnung (3) hin angeordnet sind.

2. Schalthebelanordnung nach Anspruch 1, **dadurch gekennzeichnet, dass** die Mittel zum Verschieben des durchhängenden Abschnitts (11) ein an dem Balg (4) angebrachtes Versteifungselement (12, 17, 18) umfassen, das diesen von Schalthebel (2) abgespreizt hält.

3. Schalthebelanordnung nach Anspruch 1 oder 2, **dadurch gekennzeichnet, dass** das Versteifungselement (12, 17) sich ringförmig um den Schalthebel (2) erstreckt.

4. Schalthebelanordnung nach Anspruch 1, 2 oder 3, **dadurch gekennzeichnet, dass** das Versteifungselement (12, 17, 18) mit dem Schalthebel (2) unverbunden ist.

5. Schalthebelanordnung nach einem der Ansprüche 2 bis 4, **dadurch gekennzeichnet, dass** das Versteifungselement (17, 18) zwei federnd verbundene Schenkel (23, 24) umfasst, von denen einer zwischen dem tiefsten Punkt des durchhängenden Abschnitts (12) und der Spitze (8) des Balges (4) mit dem Rand der Öffnung (3) oder zwischen diesem tiefsten Punkt und dem Rand der Öffnung (3) mit dem Balg (4) verbunden ist und die bei einem Strecken des Balges (4) elastisch auseinanderspreizbar sind.

6. Schalthebetanordnung nach Anspruch 5, **dadurch gekennzeichnet, dass** der Balg (4) aus wenigstens einer äußeren und einer inneren Materiallage (21, 22) aufgebaut ist und wenigstens der zwischen dem tiefsten Punkt und der Spitze (8) des Balgs gelegene Schenkel an der inneren Materiallage befestigt ist.

7. Schalthebelanordnung nach Anspruch 1, **dadurch gekennzeichnet, dass** die Mittel zum Verschieben des durchhängenden Abschnitts (11) ein elastisch dehnbares, flexibles Band (26) umfassen, das einerseits an dem Balg (4) und andererseits an dem Rand der Öffnung (3) beabstandet von der Basis (7) des Balgs (4) befestigt ist.

8. Schalthebelanordnung nach Anspruch 7, **dadurch gekennzeichnet, dass** das flexible Band (26) an dem Balg (4) beabstandet von dessen Spitze befestigt ist.

9. Schalthebel nach Anspruch 8, **dadurch gekennzeichnet, dass** das flexible Band (26) an dem Balg (4) in einem Abstand von nicht mehr als zwei Dritteln, vorzugsweise nicht mehr als der Hälfte der Ausdehnung des Balges (4) von seiner Basis (7) bis zu seiner Spitze (8), von der Basis (7) des Balges (4) befestigt ist.

10. Schalthebelanordnung nach einem der Ansprüche 7 bis 9, **dadurch gekennzeichnet, dass** das flexible Band (26) an dem durchhängenden Abschnitt (11) des Balgs (4) befestigt ist.

11. Schalthebelanordnung nach einem der Ansprüche 7 bis 10, **dadurch gekennzeichnet, dass** das flexible Band (26) sich entlang einer dem Gelenk (9) zugewandten Innenseite des Balgs (4) erstreckt.

12. Schalthebelanordnung nach einem der Ansprüche 7 bis 11, **dadurch gekennzeichnet, dass** der Balg (4) aus einer äußeren und einer inneren Materiallage (21, 22) aufgebaut ist und das flexible Band (26) an der inneren Materiallage (22) befestigt ist.

13. Schalthebelanordnung mit einem Träger (1), einem Schalthebel (2), der über ein Gelenk (9) schwenkbar mit dem Träger (1) verbunden ist und sich durch eine Öffnung (3) des Trägers erstreckt, und einem den Schalthebel (2) umgebenden verformbaren Balg (4), der eine mit dem Rand der Öffnung (3) verbundene Basis (7) und eine an dem Schalthebel befestigte Spitze (8) aufweist, **dadurch gekennzeichnet, dass** der Balg (4) zwischen der Basis (7) und der Spitze (8) einen durch die Öffnung (3) durchhängenden Abschnitt (11) aufweist und Mittel (30) zum Verschieben des durchhängenden Abschnittes (11) einen vom Balg (4) umgebenen Formkörper (33) aufweisen, wobei der Formkörper (33) im Schalthebel (2) gelagert ist und sich in Richtung der Öffnung (3) des Trägers (1) erweitert.

14. Schalthebelanordnung nach Anspruch 13, **dadurch gekennzeichnet, dass** der Formkörper (33) im Bereich der Spitze (8) des Balgs mit dem Schalthebel (2) verbunden ist.

15. Schalthebelanordnung nach Anspruch 13 oder 14, **gekennzeichnet durch** einen glockenförmigen Formkörper (33).

16. Schalthebelanordnung nach einem der Ansprüche 13 bis 15, **dadurch gekennzeichnet, dass** das Gelenk (9) in den vom Formkörper (33) umschlossenen Raum ragt.

17. Schalthebelandordnung nach einem der Ansprüche 13 bis 16, **dadurch gekennzeichnet, dass** der Formkörper (33) mehrteilig, insbesondere zweiteilig gestaltet ist.

18. Schalthebelanordnung nach Anspruch 17, **dadurch gekennzeichnet, dass** der Formkörper (33) durch zwei identische Formkörperhälften (34, 35) gebildet ist, die mittels Steckverbindungen (36) verbindbar sind, wobei die jeweilige Formkörperhälfte eine Aufnahme (37) für den Schalthebel (2) aufweist.

19. Schalthebelanordnung nach einem der Ansprüche 13 bis 18, **dadurch gekennzeichnet, dass** der Formkörper (33) aus elastischem Material gebildet ist.

## Claims

1. A shift lever arrangement, comprising a support (1), a shift lever (2) which is pivotably connected with the support (1) via a hinge (9) and extends through an opening (3) of the support, and a deformable bellows (4) which surrounds the shift lever (2) and comprises a base (7) connected to the edge of the opening (3) and a tip (8) fixed to the shift lever (2), **characterized in that** the bellows (4) comprises a section (11) between the base (7) and the tip (8) which sags through the opening (3) and which is capable of engaging in a region (13) with clamping risks adjacent to the hinge (9), and means (12, 17, 18, 26) for displacing the sagging section (11) from an equilibrium position towards the edge of the opening (3).

2. A shift lever arrangement according to claim 1, **characterized in that** the means for displacing the sagging section (11) comprise a stiffening element (12, 17, 18) which is attached to the bellows (4) and keeps it spaced apart from the shift lever (2).

3. A shift lever arrangement according to claim 1 or 2, **characterized in that** the stiffening element (12, 17) extends annularly around the shift lever (2).

4. A shift lever arrangement according to claim 1, 2 or 3, **characterized in that** the stiffening element (12, 17, 18) is not connected with the shift lever (2).

5. A shift lever arrangement according to one of the claims 2 to 4, **characterized in that** the stiffening element (17, 18) comprises two resiliently connected limbs (23, 24), of which one is connected between the lowest point of the sagging section (12) and the tip (8) of the bellows (4) with the edge of the opening (3) or with the bellows (4) between said lowest point and the edge of the opening (3), and which can be spaced apart elastically upon stretching the bellows (4).

6. A shift lever arrangement according to claim 5, **characterized in that** the bellows (4) is composed of at least one outer and one inner material layer (21, 22) and at least the limb which is disposed between the lowest point and the tip (8) of the bellows is fastened to the inner material layer.

7. A shift lever arrangement according to claim 1, **characterized in that** the means for displacing the sagging section (11) comprise an elastically extensible, flexible band (26) which is fastened to the bellows (4) on the one hand and to the edge of the opening (3) spaced from the base (7) of the bellows (4) on the other hand.

8. A shift lever arrangement according to claim 7, **characterized in that** the flexible band (26) is fastened to the bellows (4) spaced from its tip.

9. A shift lever arrangement according to claim 8, **characterized in that** the flexible band (26) is fastened to the bellows (4) at a distance of not more than two-thirds, preferably not more than half, of the extension of the bellows (4) from its base (7) to its tip (8), from the base (7) of the bellows (4).

10. A shift lever arrangement according to one of the claims 7 to 9, **characterized in that** the flexible band (26) is fastened to the sagging section (11) of the bellows (4).

11. A shift lever arrangement according to one of the claims 7 to 10, **characterized in that** the flexible band (26) extends along an inner side of the bellows (4) facing the hinge (9).

12. A shift lever arrangement according to one of the claims 7 to 11, **characterized in that** the bellows (4) is made up of an outer and an inner material layer (21, 22) and the flexible band (26) is fastened to the inner material layer (22).

13. A shift lever arrangement, comprising a support (1), a shift lever (2) which is pivotably connected with the support (1) via a hinge (9) and extends through an opening (3) of the support, and a deformable bellows (4) which surrounds the shift lever (2) and comprises a base (7) connected to the edge of the opening (3) and a tip (8) fixed to the shift lever (2), **characterized in that** the bellows (4) comprises a section (11) between the base (7) and the tip (8) which sags through the opening (3), and means (30) for displacing the sagging section (11) comprise a shaped element (33) which is surrounded by the bellows (4), with the shaped element (33) being held in the shift lever (2) and expands in the direction of the opening (3) of the support (1).

14. A shift lever arrangement according to claim 13, **characterized in that** the shaped element (33) is connected with the shift lever (2) in the region of the tip (8) of the bellows.

15. A shift lever arrangement according to claim 13 or 14, **characterized by** a bell-shaped element (33).

16. A shift lever arrangement according to one of the claims 13 to 15, **characterized in that** the hinge (9) protrudes into the space surrounded by the shaped element (33).

17. A shift lever arrangement according to one of the claims 13 to 16, **characterized in that** the shaped element (33) is arranged in several parts, especially two parts.

18. A shift lever arrangement according to claim 17, **characterized in that** the shaped element (33) is formed by two identical shaped-element halves (34, 35) which are connectable by means of plug-in connections (36), with the respective shaped-element half forming a receiver (37) for the shift lever (2).

19. A shift lever arrangement according to one of the claims 13 to 18, **characterized in that** the shaped element (33) is made of elastic material.

## Revendications

1. Disposition de levier de vitesses avec un support (1), un levier de vitesses (2) qui est relié au support (1) de façon pivotante par une articulation (9) et qui s'étend à travers une ouverture (3) du support, et avec un soufflet (4) déformable entourant le levier de vitesses (2), qui présente une base (7) reliée au bord de l'ouverture (3) et un sommet (8) fixé au levier de vitesses, **caractérisée en ce que** le soufflet (4) présente entre la base (7) et le sommet (8) une partie (11) qui pend à travers l'ouverture (3) qui est en mesure de se mettre en prise dans une zone de risque de coincement (13) voisine de l'articulation (9), et des moyens (12, 17, 18, 26) sont prévus pour déplacer la partie pendante (11) d'une position d'équilibre vers le bord de l'ouverture (3).

2. Disposition de levier de vitesses selon la revendication 1, **caractérisée en ce que** les moyens pour déplacer la partie pendante (11) comprennent un élément raidisseur (12, 17, 18) disposé sur le soufflet (4), qui tient celui-ci écarté du levier de vitesses (2).

3. Disposition de levier de vitesses selon la revendication 1 ou 2, **caractérisée en ce que** l'élément raidisseur (12, 17) s'étend en forme d'anneau autour du levier de vitesses (2).

4. Disposition de levier de vitesses selon la revendication 1, 2 ou 3, **caractérisée en ce que** l'élément raidisseur (12, 17, 18) n'est pas relié au levier de vitesses (2).

5. Disposition de levier de vitesses selon l'une des revendications 2 à 4, **caractérisée en ce que** l'élément raidisseur (17, 18) comprend deux bras (23, 24) reliés de façon élastique, dont l'un est assemblé entre le point le plus bas de la partie pendante (12) et le sommet (8) du soufflet (4) avec le bord de l'ouverture (3) ou entre ce point le plus bas et le bord de l'ouverture (3) avec le soufflet (4) et qui peuvent être écartés l'un de l'autre de façon élastique lors d'un étirement du soufflet (4).

6. Disposition de levier de vitesses selon la revendication 5, **caractérisée en ce que** le soufflet (4) est composé d'au moins une couche de matériau extérieure et une couche intérieure (21, 22) et au moins le bras situé entre le point le plus bas et le sommet (8) du soufflet est fixé sur la couche de matériau intérieure.

7. Disposition de levier de vitesses selon la revendication 1, **caractérisée en ce que** les moyens pour déplacer la partie pendante (11) comprennent une bande élastique flexible (26) qui est fixée d'un côté au soufflet (4) et de l'autre côté au bord de l'ouverture (3) à distance de la base (7) du soufflet (4).

8. Disposition de levier de vitesses selon la revendication 7, **caractérisée en ce que** la bande flexible (26) est fixée sur le soufflet (4) à distance du sommet de celui-ci.

9. Levier de vitesses selon la revendication 8, **caractérisé en ce que** la bande flexible (26) est fixée sur le soufflet (4) à une distance de la base (7) du soufflet (4) ne dépassant pas les deux tiers, de préférence ne dépassant pas la moitié de l'étendue du soufflet (4) de sa base (7) à son sommet (8).

10. Disposition de levier de vitesses selon l'une des revendications 7 à 9, **caractérisée en ce que** la bande flexible (26) est fixée sur la partie pendante (11) du soufflet (4).

11. Disposition de levier de vitesses selon l'une des revendications 7 à 10, **caractérisée en ce que** la bande flexible (26) s'étend le long de la face intérieure du soufflet (4) orientée vers l'articulation (9).

12. Disposition de levier de vitesses selon l'une des revendications 7 à 11, **caractérisée en ce que** le soufflet (4) se compose d'une couche de matériau extérieure et d'une couche intérieure (21, 22) et la bande flexible (26) est fixée sur la couche de matériau intérieure (22).

13. Disposition de levier de vitesses avec un support (1), un levier de vitesses (2) qui est relié au support (1) relié au support (1) de façon pivotante par une articulation (9) et qui s'étend à travers une ouverture (3) du support, et avec un soufflet (4) déformable entourant le levier de vitesses (2), qui présente une base (7) reliée au bord de l'ouverture (3) et un sommet (8) fixé au levier de vitesses, **caractérisée en ce que** le soufflet (4) présente entre la base (7) et le sommet (8) une partie (11) qui pend à travers l'ouverture (3) et les moyens (30) pour déplacer la partie pendante (11) comportent un élément mis en forme (33) entouré par le soufflet (4), lequel élément mis en forme (33) est supporté dans le levier de vitesses (2) se s'élargit en direction de l'ouverture (3) du support (1).

14. Disposition de levier de vitesses selon la revendication 13, **caractérisée en ce que** l'élément mis en forme (33) est relié au niveau du sommet (8) du soufflet avec le levier de vitesses (2).

15. Disposition de levier de vitesses selon la revendication 13 ou 14, **caractérisé en ce que** l'élément mis en forme (33) est en forme de cloche.

16. Disposition de levier de vitesses selon l'une des revendications 13 à 15, **caractérisée en ce que** l'articulation (9) dépasse dans l'espace renfermé par l'élément mis en forme (33).

17. Disposition de levier de vitesses selon l'une des revendications 13 à 16, **caractérisée en ce que** l'élément mis en forme (33) est construit en plusieurs parties, en particulier en deux parties.

18. Disposition de levier de vitesses selon la revendication 17, **caractérisée en ce que** l'élément mis en forme (33) est formé par deux moitiés d'élément mis en forme (34, 35) identiques, qui peuvent être assemblées au moyen d'assemblages emboîtés (36), chaque moitié d'élément mis en forme présentant un logement (37) pour le levier de vitesses (2).

19. Disposition de levier de vitesses selon l'une des revendications 13 à 18, **caractérisée en ce que** l'élément mis en forme (33) est fait de matériau élastique.
